# EUROPÄISCHE PATENTSCHRIFT

(11) **EP 4 514 646 B1**
(45) Veröffentlichungstag und Bekanntmachung des Hinweises auf die Patenterteilung: **18.02.2026**
(21) Anmeldenummer: 23751547.3
(22) Anmeldetag: 19.07.2023
(51) Int. Cl.: B60L 5/16, B60L 5/28, B60L 5/36

(54) **STRASSENFAHRZEUG MIT STROMABNEHMER**
ROAD VEHICLE WITH CURRENT COLLECTOR
VÉHICULE ROUTIER ÉQUIPÉ D'UN COLLECTEUR DE COURANT

(30) Priorität: 17.08.2022 DE 102022208517
(43) Veröffentlichungstag der Anmeldung: 05.03.2025
(73) Patentinhaber: Siemens Mobility GmbH, 80997 München (DE)
(72) Erfinder: BLASE, Bastian, 13156 Berlin (DE)
(74) Vertreter: Siemens Patent Attorneys
(86) Internationale Anmeldenummer: PCT/EP2023/070017
(87) Internationale Veröffentlichungsnummer: WO 2024/037813

(56) Entgegenhaltungen:
- EP-A1- 3 974 234
- EP-B1- 0 901 424
- US-A1- 2020 369 155
- US-A1- 2021 354 565

## Beschreibung

Die Erfindung betrifft ein Straßenfahrzeug nach dem Oberbegriff des Patentanspruches 1.

Ein derartiges Straßenfahrzeug ist beispielsweise aus der internationalen Veröffentlichung WO 2019/042843 A1 bekannt. Es umfasst einen elektrischen oder hybridelektrischen Traktionsantrieb und einen Stromabnehmer zur Einspeisung von Traktionsenergie aus einer zweipoligen, je Kontaktpol einen Fahrdraht aufweisenden Oberleitungsanlage. Der Stromabnehmer weist ein aufrichtbares Traggestänge mit einem festen Ende, an dem es sich gelenkig auf einer Gestängebasis abstützt, und einem freien Ende, an dem es je Kontaktpol wenigstens eine Schleifleiste zur elektrischen Kontaktierung der jeweiligen Fahrdrähte trägt. Der Stromabnehmer weist ferner einen Hubantrieb zum Aufrichten und Absenken des Traggestänges zwischen einer unteren Ruheposition und einer oberen Arbeitsposition der Schleifleisten auf. Das Traggestänge ist derart ausgebildet, dass es in der oberen Arbeitsposition zwischen den Schleifleisten der unterschiedlichen Kontaktpole eine Hubdifferenz ermöglicht.

Da Straßenfahrzeuge nicht spurgebunden sind, können sie jederzeit die elektrifizierte Fahrspur, über der die Fahrdrähte der elektrischen Oberleitungsanlage etwa symmetrisch zur Spurmitte verlaufen, seitlich verlassen. Das kann beispielsweise auf mehrspurigen Fahrbahnen anlässlich eines Überholmanövers oder zum Verlassen der Fahrbahn an einer Ausfahrt erfolgen. Beim Verlassen der elektrifizierten Fahrspur wird der Stromabnehmer abgesenkt. Um dabei Kollisionen des Stromabnehmers mit seitlich der Fahrspur angeordneten Infrastruktureinrichtungen zu vermeiden, ist ein sogenanntes Lichtraumprofil seitlich und oberhalb der Fahrdrähte als zulässiger Bewegungsfreiraum für den Stromabnehmer definiert. Hierzu weist der Stromabnehmer des aus WO 2019/042843 A1 bekannten Straßenfahrzeugs eine Messvorrichtung auf, welche einen Fahrdrahtkontakt an seitlich der Schleifleisten angeordneten Endkontaktelementen detektieren und automatisch ein Stellsignal zum Absenken des Stromabnehmers auslösen.

Ein Verlassen der elektrifizierten Fahrspur kann aber auch abrupt, beispielsweise durch ein Ausweichmanöver in einer Gefahrensituation ausgelöst, erfolgen. Ein in diesem Moment die Fahrdrähte kontaktierender Stromabnehmer muss frühzeitig und sehr schnell abgesenkt werden, um das Lichtraumprofil nicht zu verletzen, da das Straßenfahrzeug und damit auch der Stromabnehmer bis zum Auslösen der Absenkung durch seine Endkontaktelemente bereits eine hohe Seitengeschwindigkeit erreicht hat. Hierzu offenbart die europäische Veröffentlichung EP 3 974 234 A1, den Stromabnehmer mit einem Beschleunigungssensor zur Erfassung einer Querbeschleunigung des Stromabnehmers im Fahrzeugbetrieb auszustatten. Eine mit dem Hubantrieb gekoppelte Steuereinheit ist dazu ausgebildet, ein Absenken des Traggestänges in Abhängigkeit von der erfassten Querbeschleunigung auszulösen. Damit kann in Abhängigkeit der Quergeschwindigkeit, die sich zwangsläufig aus den Querbeschleunigungen ergibt, schon unterschiedlich früh mit dem Absenken des Stromabnehmers begonnen werden, um so in jeder Fahrsituation mit Querlenkbewegungen etwa den gleichen Freiraum zu benötigen.

Eine Verletzung des Lichtraumprofils kann aber beim seitlichen Verlassen der elektrifizierten Fahrspur auch dadurch entstehen, dass die wenigstens eine Schleifleiste des einen Kontaktpols noch einen Fahrdraht kontaktiert, während die wenigstens eine Schleifleiste des anderen Kontaktpols bereits frei schwebt und um die zwischen den Kontaktpolen zulässige Hubdifferenz nach oben steigt. Dagegen kann man die Hubdifferenz begrenzen. Hierzu ist aus der Offenlegungsschrift DE 10 2018 215 816 A1 ein Stromabnehmer der eingangs genannte Art bekannt, dessen Traggestänge einen Unterarm und zwei die Schleifleisten der jeweiligen Kontaktpole tragende Oberarme aufweist. Zum Ausgleichen einer Höhendifferenz zwischen den Schleifleisten der unterschiedlichen Kontaktpole ist eine Ausgleichswippe vorgesehen, die einen Wippenständer und einen über ein Wippengelenk drehbar mit diesem verbundenen Wippenbalken aufweist. Der Wippenständer ist über ein Grundgelenk mit der Gestängebasis verbunden und der Wippenbalken über beiderseits des Wippengelenks angeordnete Ausgleichsgelenke jeweils drehbar mit Koppelstangen verbunden. Eine Drehbewegung des Wippenbalkens um eine Wippengelenksachse des Wippengelenks ist durch ein Anschlagelement für den Wippenbalken begrenzt.

US 2020/369155 A1 offenbart ein Fahrzeug, das einen inertialen Sensor umfasst, um Beschleunigungen und Bewegungen des Fahrzeugs zu detektieren. Gleichzeitig umfasst das Fahrzeug einen anderen im Stromabnehmer integrierten Sensor. Eine Steuereinheit vergleicht die Bewegungen des Stromabnehmers mit den Bewegungen des Fahrzeugs und entscheidet, ob der Stromabnehmer gewartet werden muss und ob ein Absenken des Stromabnehmers auslösen werden muss.

EP 0 901 424 B1 offenbart ein Verfahren zur Neigung eines auf einem Wagenkasten eines Schienenfahrzeugs angeordneten Stromabnehmers, das die Ermittlung verschiedener Winkel im Fahrzeug erfordert.

Die Hubdifferenz kann auf ein Maß begrenzt werden, welches eine vertikale Ausgleichsbewegung zwischen den Schleifleisten der beiden Kontaktpole ermöglicht, um Höhendifferenzen zwischen den Fahrdrahthöhen der beiden Fahrdrähte über dem Fahrbahnniveau zu kompensieren, um Fahrbahnüberhöhungen sowie Wankbewegungen des Stromabnehmers relativ zu den Fahrdrähten aufgrund von Seitenbewegungen des und Scherwinden auf das Straßenfahrzeug auszugleichen. Eine starke Begrenzung der Hubdifferenz erlaubt zwar die Einhaltung des Lichtraumprofils, kann aber die Verfügbarkeit der Oberleitungsanlage in bestimmten Fahrsituationen beschränken. So können starke Wankbewegungen des Straßenfahrzeugs durch einseitig überfahrene Hindernisse auf der Fahrbahn oder durch einseitig durchfahrene Vertiefungen in der Fahrbahn auftreten - etwa durch große Gesteinsbrocken auf oder durch tiefe Schlaglöcher in Fahrbahnen von Minenanlagen. Durch eine Begrenzung der Hubdifferenz können die Schleifleisten eines Kontaktpols den Kontakt zu ihrem Fahrdraht verlieren, was mit einer unerwünschten Unterbrechung der Einspeisung von elektrischer Leistung in das Straßenfahrzeug einhergeht.

Der Erfindung liegt daher die Aufgabe zugrunde, ein Straßenfahrzeug der eingangs genannten Art bereitzustellen, welches unter Einhaltung des Lichtraumprofils bei möglichst großer maximaler Hubdifferenz zwischen den Schleifleisten der unterschiedlichen Kontaktpole betrieben werden kann.

Die Aufgabe wird erfindungsgemäß gelöst durch ein gattungsgemäßes Straßenfahrzeug mit den im kennzeichnenden Teil des Patentanspruches 1 angegebenen Merkmalen.

Demnach umfasst ein Straßenfahrzeug einen elektrischen oder hybridelektrischen Traktionsantrieb und einen Stromabnehmer zur Einspeisung von Traktionsenergie aus einer zweipoligen, je Kontaktpol einen Fahrdraht aufweisenden Oberleitungsanlage. Der Stromabnehmer weist ein aufrichtbares Traggestänge mit einem festen Ende, an dem es sich gelenkig auf einer Gestängebasis abstützt, und einem freien Ende, an dem es je Kontaktpol wenigstens eine Schleifleiste zur elektrischen Kontaktierung der jeweiligen Fahrdrähte trägt, auf. Der Stromabnehmer weist ferner einen Hubantrieb zum Aufrichten und Absenken des Traggestänges zwischen einer unteren Ruheposition und einer oberen Arbeitsposition der Schleifleisten auf. Dabei ist das Traggestänge derart ausgebildet, dass es in der oberen Arbeitsposition zwischen den Schleifleisten der unterschiedlichen Kontaktpole eine Hubdifferenz ermöglicht.

Erfindungsgemäß umfasst das Straßenfahrzeug eine fahrzeugfeste, inertiale Messeinheit zur Erfassung von Beschleunigungskomponenten ihres Beschleunigungsvektors und von Drehratenkomponenten ihres Drehratenvektors. Die Vektorkomponenten werden jeweils in einem durch Fahrzeuglängsrichtung, Fahrzeugquerrichtung und Fahrzeughochrichtung gebildeten, orthogonalen Koordinatensystem bestimmt. Die Fahrzeuglängsrichtung weist dabei in Fahrtrichtung des Straßenfahrzeugs. Die Messeinheit kann mit einem feststehenden Bauteil des Stromabnehmers, etwa der Gestängebasis, oder direkt im Straßenfahrzeug, etwa an einem Fahrzeuggestell des Straßenfahrzeugs, befestigt und ausgerichtet sein. Eine mit dem Hubantrieb gekoppelte Steuereinheit ist dazu ausgebildet, ein Absenken des Traggestänges in Abhängigkeit wenigstens einer der erfassten Beschleunigungskomponenten und wenigstens einer der erfassten Drehratenkomponenten auszulösen. Durch Auswertung des durch Linearbeschleunigung und Winkelgeschwindigkeit gegebenen Bewegungszustands des Straßenfahrzeugs mit Stromabnehmer wird das Absenken des Stromabnehmers zur Vermeidung einer Lichtraumprofilverletzung nicht nur in Abhängigkeit von der Querposition des Straßenfahrzeugs relativ zu den Fahrdrähten und von der Quergeschwindigkeit des Straßenfahrzeugs ausgelöst, sondern es werden als weitere Größen eine Linearbeschleunigung und eine Winkelgeschwindigkeit des Straßenfahrzeugs berücksichtigt, um in bestimmten Fahrsituationen nicht unnötig den Stromabnehmer abzusenken. Hierdurch wird die Verfügbarkeit eines Leistungsbezugs aus der Oberleitungsanlage erhöht und gleichzeitig eine Verletzung des Lichtraumprofils vermieden.

In einer vorteilhaften Ausführungsform des erfindungsgemäßen Straßenfahrzeugs ist die Steuereinheit dazu ausgebildet, die erfassten Beschleunigungskomponenten und die erfassten Drehratenkomponenten zeitlich zu Integralwerten aufzuintegrieren und ein Absenken des Traggestänges in Abhängigkeit einer Überschreitung einer vorgegebenen Schwellwertkurve für den Integralwert auszulösen. Hierdurch wird vermieden, dass ein Absenken des Stromabnehmers bei nur kurzzeitigen Spitzenwerten der Beschleunigungs- und Drehratenkomponenten ausgelöst wird. Für einzelne oder alle Vektorkomponenten werden Schwellwertkurven hinterlegt, so dass ein Auslösen der Stromabnehmerabsenkung erst bei deren Überschreiten stattfindet.

In einer weiteren vorteilhaften Ausführungsform des erfindungsgemäßen Straßenfahrzeugs ist die Schwellwertkurve für den Integralwert zeitabhängig und nimmt vorzugsweise hyperbolisch mit der Zeit ab. Unterhalb der Schwellwertkurve findet keine Auslösung des Absenkvorgangs statt, bei Überschreiten drahtet der Stromabnehmer ab. Durch die Betrachtung über das Produkt aus Vektorkomponenten der Beschleunigung beziehungsweise Drehrate und aus der Zeit führen höhere Komponentenwerte schon nach kürzerer Zeit zum Absenken, niedrigere erst nach längerer Zeit.

In einer weiteren vorteilhaften Ausführungsform des erfindungsgemäßen Straßenfahrzeugs ist die Steuereinheit dazu ausgebildet, ein Absenken des Traggestänges auszulösen, falls die Werte der Drehratenkomponente um die Fahrzeuglängsrichtung und der Beschleunigungskomponente in Fahrzeugquerrichtung ungleiche Vorzeichen aufweisen. Die Drehratenkomponente um die Fahrzeuglängsrichtung weist beispielsweise ein positives Vorzeichen auf, wenn das Straßenfahrzeug in einer Linkskurve fliehkraftbedingt nach außen kippt und die Messeinheit somit in Fahrzeuglängsrichtung gesehen sich um diese im Uhrzeigersinn dreht. Gleiches gilt für das Vorzeichen der Drehratenkomponente um die Fahrzeuglängsrichtung, wenn ein in Fahrzeuglängsrichtung gesehen links angeordnetes Fahrzeugrad durch ein Hindernis hochgehoben wird oder wenn ein in Fahrzeuglängsrichtung gesehen rechts angeordnetes Fahrzeugrad in eine Fahrbahnvertiefung fällt. Die Beschleunigungskomponente in Fahrzeugquerrichtung weist hingegen ein negatives Vorzeichen auf, wenn das Straßenfahrzeug eine Linkskurve fährt, da der von der Zentrifugalbeschleunigung herrührende Anteil der Beschleunigungskomponente vom Kurvenmittelpunkt weg zeigt. Das Vorzeichen der Beschleunigungskomponente in Fahrzeugquerrichtung ist aber positiv in den beiden anderen Fahrsituationen, da der auf die Messeinheit wirkende Beschleunigungsvektor im Falle einer linksseitigen Hindernisüberfahrung nach links unten und im Falle einer rechtsseitigen Muldendurchfahrung links oben gerichtet ist. In der Linkskurvenfahrt bei einem Ausweichmanöver kann die nicht mehr kontaktierende Schleifleiste nach Erreichen der maximalen Hubdifferenz das Lichtraumprofil verletzen, so dass die Bedingung "positives Vorzeichen der Drehratenkomponente um die Fahrzeuglängsrichtung" und "negatives Vorzeichen der Beschleunigungskomponente in Fahrzeugquerrichtung" erfindungsgemäß zu einem Absenken des Stromabnehmers führt. In den beiden anderen Fahrsituationen ist diese Bedingung nicht erfüllt, da die Drehratenkomponente um die Fahrzeuglängsrichtung und die Beschleunigungskomponente in Fahrzeugquerrichtung gleiche Vorzeichen haben. In diesem Fall wird der Stromabnehmer erfindungsgemäß nicht abgesenkt, um die große Hubdifferenz zur Aufrechterhaltung der Kontaktierung beider Fahrdrähte zu nutzen.

In einer weiteren vorteilhaften Ausführungsform des erfindungsgemäßen Straßenfahrzeugs ist die Steuereinheit dazu ausgebildet ist, ein Absenken des Traggestänges auszulösen, falls die Drehratenkomponente um die Fahrzeugquerrichtung einen vorgegebenen positiven Maximalwert überschreitet und/oder die Beschleunigungskomponente in Fahrzeuglängsrichtung einen vorgegebenen negative Maximalwert überschreitet. Falls das Straßenfahrzeug ein starkes Bremsmanöver ausführt, das zu einem Absenken des Stromabnehmers führen soll - etwa, um bei einer möglichen Kollision des Straßenfahrzeugs den Stromabnehmer in einen elektrisch sicheren Zustand in seiner Ruheposition zu bringen -, erfährt die Messeinheit eine große negative Beschleunigungskomponente in Fahrzeuglängsrichtung und aufgrund der damit einhergehenden Nickbewegung der Messeinheit um die Fahrzeugquerachse im Uhrzeigersinn eine große positive Drehratenkomponente um die Fahrzeugquerrichtung. Überschreiten die genannte Beschleunigungskomponente und/oder Drehratenkomponente oder deren Integralwerte vorgegebene Maximalwerte, so wird ein Absenken des Traggestänges ausgelöst.

Durch Auswertung des Beschleunigungsvektors und des Drehratenvektors können auch Bedingungen zum Absenken oder Nichtabsenken des Stromabnehmers für andere Fahrsituation definiert werden, in welche Betrag, Vorzeichen und Integralwert der Vektorkomponenten einfließen.

Weitere Vorteile und Eigenschaften des erfindungsgemäßen Straßenfahrzeugs ergeben sich aus nachfolgender Beschreibung eines Ausführungsbeispiels anhand der Zeichnungen, in deren
- FIG 1: ein auf einer mehrspurigen Fahrbahn befindliches Straßenfahrzeug mit Blick in Fahrtrichtung,
- FIG 2: ein Koordinatensystem für das Messgerät mit beispielhaftem Beschleunigungs- und Drehratenvektor,
- FIG 3: ein Diagramm für den zeitlichen Verlauf der Schwellwertkurve für die Integralwerte von Beschleunigungs- oder Drehratenkomponenten,
- FIG 4: eine Bedingungstafel für ein Absenken des Stromabnehmers bei positiver Drehratenkomponente um die Fahrzeuglängsrichtung,
- FIG 5: eine Bedingungstafel für ein Absenken des Stromabnehmers bei negativer Drehratenkomponente um die Fahrzeuglängsrichtung,
- FIG 6: das Straßenfahrzeug in einer Fahrsituation "Ausweichmanöver mit Linkskurve",
- FIG 7: das Straßenfahrzeug in einer Fahrsituation "Überfahren eines linksseitigen Hindernisses", und
- FIG 8: das Straßenfahrzeug in einer Fahrsituation "Durchfahren einer rechtsseitigen Fahrbahnvertiefung"
schematisch veranschaulicht sind.

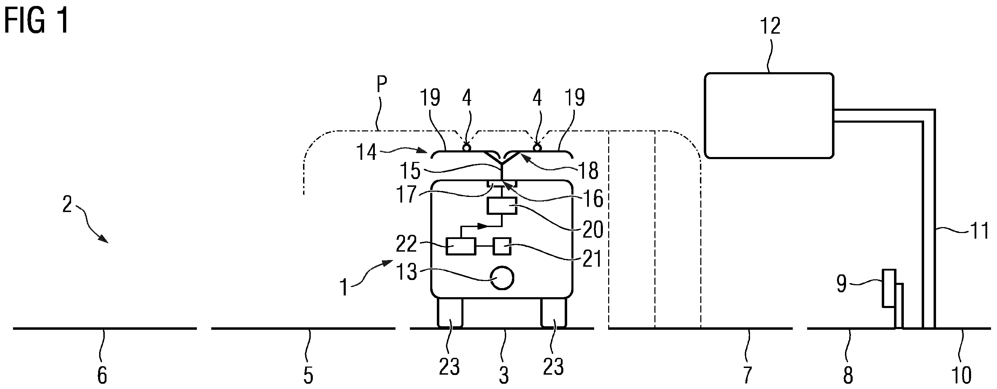

Gemäß FIG 1 befährt ein erfindungsgemäßes Straßenfahrzeug 1 eine mehrspurige Fahrbahn 2, etwa eine Autobahn mit Rechtsverkehr, deren durchgängige Verkehrsfläche mittels Fahrbahnmarkierungen unterteilt ist. So nutzt das Straßenfahrzeug 1 eine durch einen rechten Fahrstreifen 3 gebildete, elektrifizierte Fahrspur, oberhalb welcher als Hin- und Rückleiter ausgebildete Fahrdrähte 4 einer zweipoligen Oberleitungsanlage parallel zueinander und symmetrisch zu einer Fahrstreifenmitte angeordnet sind. Die Oberleitungsanlage weist zwei Kontaktpole auf, weil das Straßenfahrzeug 1 gummibereifte und damit gegen Erde isolierende Fahrzeugräder 23 aufweist. Solche Oberleitungsanlagen sind an sich bekannt, weshalb Tragseile und Hänger für die Fahrdrähte 4 sowie Ausleger, Masten und Spanneinrichtungen ebenso wie Unterwerke nicht dargestellt sind. Aufgrund seiner Spurungebundenheit kann das Straßenfahrzeugs 1 zum Überholen oder Ausweichen auch einen mittleren Fahrstreifen 5, der zwischen dem rechten Fahrstreifen 3 und einem linken Fahrstreifen 6 verläuft, oder zum Ausfädeln aus der Fahrbahn 2 an einer Ausfahrt einen Verzögerungsstreifen 7 benutzen. Rechts des Verzögerungsstreifens 7 verläuft ein Standstreifen 8, an dessen Außenseite ein als Leitplanke ausgebildetes Fahrzeugrückhaltesystem 9 angeordnet ist. Außerhalb der Fahrbahn 2 verläuft ein Grünstreifen 10, auf dem Infrastruktureinrichtungen, wie etwa Masten 11 für Verkehrsschilder 12, für Mess- und Überwachungseinrichtungen und dergleichen, aufgestellt sind.

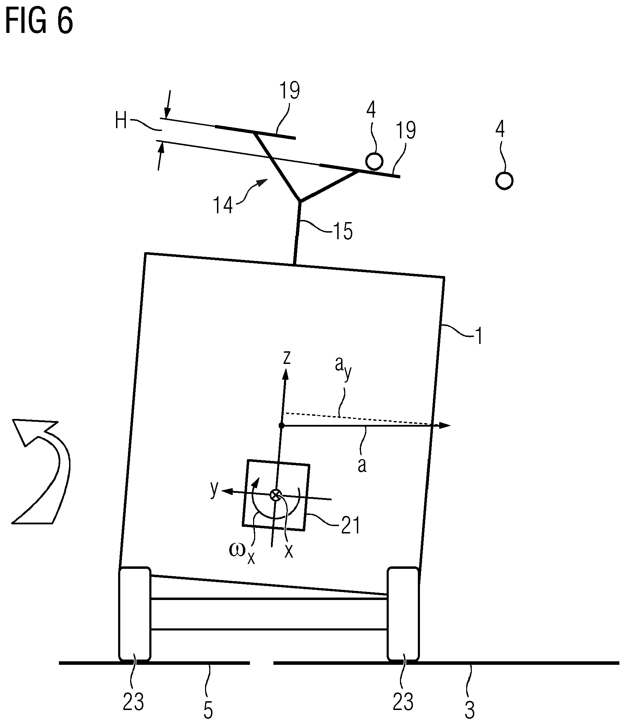

Das Straßenfahrzeug 1, etwa ein Lastkraftwagen oder Bus, umfasst einen elektrischen oder hybridelektrischen Traktionsantrieb 13 und einen Stromabnehmer 14 zur Einspeisung von Traktionsenergie für den Traktionsantrieb 13 aus der Oberleitungsanlage. Der Stromabnehmer 14 weist ein aufrichtbares Traggestänge 15 mit einem festen Ende 16, an dem es sich gelenkig auf einer fahrzeugseitigen Gestängebasis 17 abstützt, und mit einem freien Ende 18, an dem das Traggestänge 15 je Kontaktpol mindestens eine Schleifleiste 19 zur elektrischen Kontaktierung des jeweiligen Fahrdrahts 4 trägt, auf. Zum Aufrichten und Absenken des - beispielsweise pantographenartig ausgebildeten - Traggestänges 15 zwischen einer unteren Ruheposition, in der die Schleifleisten 19 im Bereich eines Fahrzeugdaches liegen, und einer oberen Arbeitsposition, in der die Schleifleisten 19 an den Fahrdrähten 4 angedrahtet sind, weist der Stromabnehmer 14 einen Hubantrieb 20 auf, der beispielsweise als Luftbalg ausgebildet sein kann. Durch Öffnen eines Drosselventils kann daraus Luft entweichen und so ein Absenken des Traggestänges 15 ausgelöst werden. Das Traggestänge 15 ist derart ausgebildet, dass es in der oberen Arbeitsposition zwischen den Schleifleisten 19 der unterschiedlichen Kontaktpole eine Hubdifferenz H (vgl. FIG 6 bis FIG 8) ermöglicht.

Aufgrund seiner seitlichen Ausdehnung und der erreichbaren Höhe in seiner Arbeitsposition bildet der Stromabnehmer 14 gegenüber Fahrzeugen mit herkömmlich zugelassenen Fahrzeugabmessungen eine Gefahrenquelle im Hinblick auf Kollisionen und Verhakens - sowohl in Bezug auf die Oberleitungskomponenten als auch in Bezug auf andere streckenseitige Infrastruktureinrichtungen. Bezüglich der elektrifizierten Fahrspur 3 wird daher ein Lichtraumprofil definiert, dessen Grenzen P in FIG 1 als Strichpunktlinie angedeutet und so gewählt sind, dass der Stromabnehmer 14 im Betrieb des Straßenfahrzeugs 1 auf dem rechten Fahrstreifen 3 und den benachbarten Fahrspuren 5 und 7 diese Grenzen P beim Anheben und Absenken nicht überschreitet.

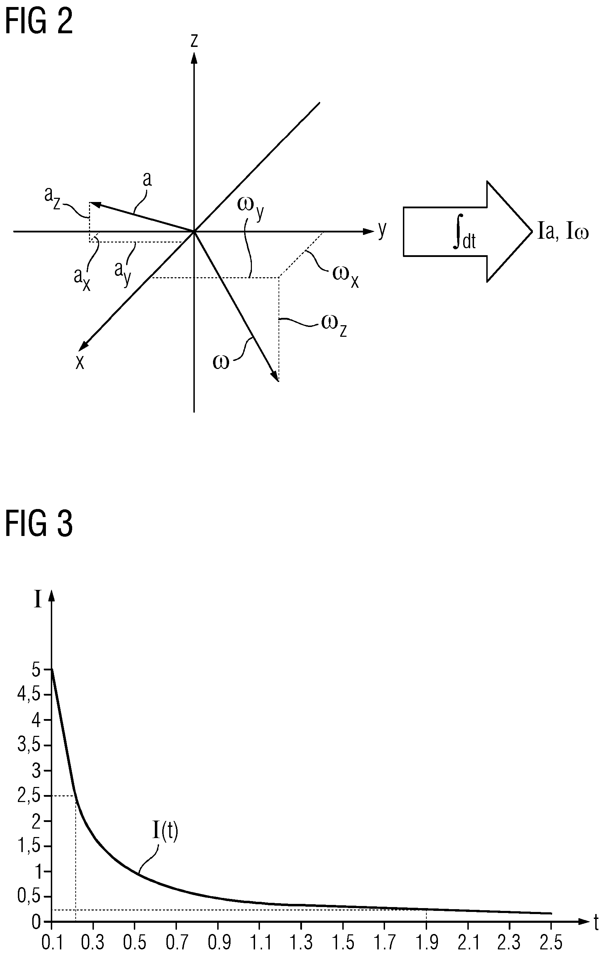

Erfindungsgemäß umfasst das Straßenfahrzeug 1 eine fahrzeugfeste, inertiale Messeinheit 21 auf. Die Messeinheit 21 erfasst gemäß FIG 2 Beschleunigungskomponenten aₓ, a_{y}, a_{z} ihres Beschleunigungsvektors a und Drehratenkomponenten ωₓ, ω_{y}, ω_{z} ihres Drehratenvektors ω. Die Vektorkomponenten aₓ, a_{y}, a_{z}, ωₓ, ω_{y}, ω_{z} werden jeweils in einem durch Fahrzeuglängsrichtung x, Fahrzeugquerrichtung y und Fahrzeughochrichtung z gebildeten, orthogonalen Koordinatensystem bestimmt. Die Messeinheit 21 ist direkt im Straßenfahrzeug 1, etwa an dessen Fahrzeuggestell, befestigt und ausgerichtet, kann aber auch an einem feststehenden Bauteil des Stromabnehmers 14, etwa der Gestängebasis 17 befestigt sein. Eine mit dem Hubantrieb 20 gekoppelte Steuereinheit 22 ist dazu ausgebildet, ein Absenken des Traggestänges 15, was im Folgenden auch als Absenken des Stromabnehmers 14 bezeichnet wird, in Abhängigkeit wenigstens einer der erfassten Beschleunigungskomponenten aₓ, a_{y}, a_{z} und wenigstens einer der erfassten Drehratenkomponenten ωₓ, ω_{y}, ω_{z} auszulösen. Durch Auswertung des durch Linearbeschleunigung a und Winkelgeschwindigkeit ω gegebenen Bewegungszustands des Straßenfahrzeugs 1 mit Stromabnehmer 14 wird das Absenken des Stromabnehmers 14 zur Vermeidung einer Lichtraumprofilverletzung nicht nur von der Querposition des Straßenfahrzeugs 1 relativ zu den Fahrdrähten 4 und von der Quergeschwindigkeit des Straßenfahrzeugs 1 ausgelöst, sondern es wird als weitere Größe eine Winkelgeschwindigkeit ω des Straßenfahrzeugs 1 berücksichtigt, um in bestimmten Fahrsituationen nicht unnötig den Stromabnehmer 14 abzusenken. Hierdurch wird die Verfügbarkeit eines Leistungsbezugs aus der Oberleitungsanlage erhöht und gleichzeitig eine Verletzung des Lichtraumprofils P vermieden.

Um zu vermeiden, dass ein Absenken des Stromabnehmers 14 bei nur kurzzeitigen Spitzenwerten der Beschleunigungskomponenten aₓ, a_{y}, a_{z} und der Drehratenkomponenten ωₓ, ω_{y}, ω_{z} ausgelöst wird, ist die Steuereinheit 22 dazu ausgebildet, die erfassten Beschleunigungskomponenten aₓ, a_{y}, a_{z} und die erfassten Drehratenkomponenten ωₓ, ω_{y}, ω_{z} gemäß FIG 2 zeitlich zu Integralwerten Ia, Iω aufzuintegrieren und ein Absenken des Traggestänges 15 in Abhängigkeit einer Überschreitung einer vorgegebenen Schwellwertkurve I(t) für den Integralwert I auszulösen. Dabei stehen die Kurzschreibweisen I, Ia, Iω, I(t) für alle Vektorkomponenten. Für ausgewählte oder auch alle Vektorkomponenten werden Schwellwertkurven I(t) hinterlegt, so dass ein Auslösen der Stromabnehmerabsenkung erst bei deren Überschreiten stattfindet.

Damit nicht bereits ein singulärer Spitzenwert der gemessenen Vektorkomponente ein Absenken auslöst, wird der Integralwert I mit einer hyperbolisch zeitabhängigen Schwellwertkurve I(t) gemäß FIG 3 verglichen. Die Auslösung des Absenkvorgangs ist also vom Produkt aus Vektorkomponente und Zeit t abhängig. Ein Absenken wird ausgelöst, wenn sich innerhalb kurzer Zeit t (z.B. 0,2 Einheiten) die gemessene Beschleunigungs- oder Drehratenkomponente zu einem hohen Integralwert I (z.B. größer 2,5 Einheiten) kumuliert haben. Ein geringerer Integralwert I (z.B. 0,25 Einheiten) löst ein Absenken erst aus, wenn sich dieser aus einer Integration der betrachteten Vektorkomponente über einen längeren Zeitraum t (z.B. 1,9 Einheiten) ergibt. Daher kann situationsabhängig unterschiedlich frühzeitig mit dem Absenken des Stromabnehmers 14 begonnen werden. Die Vorteile sind ein fahrsituationsunabhängiger Raumbedarf seitlich der Fahrdrähte 4 und damit eine erhöhte Sicherheit auch bei seltenen, aber gefährlichen Fahrmanövern.

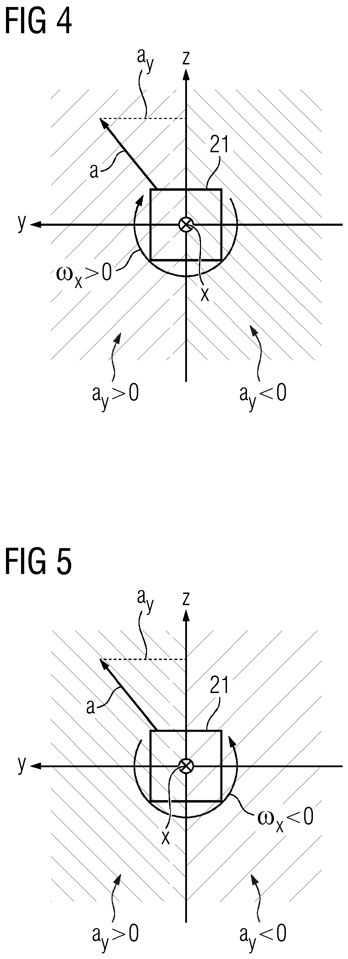

Gemäß FIG 4 und FIG 5 ist die Steuereinheit 22 des Straßenfahrzeugs 1 dazu ausgebildet, ein Absenken des Traggestänges 15 auszulösen, falls die Drehratenkomponente ωₓ um die Fahrzeuglängsrichtung x und die Beschleunigungskomponente a_{y} in Fahrzeugquerrichtung y ungleiche Vorzeichen aufweisen. Weist gemäß FIG 4 die Drehratenkomponente ωₓ um die Fahrzeuglängsrichtung x ein positives Vorzeichen auf, führen Beschleunigungskomponenten a_{y} in Fahrzeugquerrichtung y mit einem negativen Vorzeichen (rechte Halbebene a_{y} < 0) zu einer Absenkung des Traggestells 15, während dies bei Beschleunigungskomponenten a_{y} in Fahrzeugquerrichtung y mit einem positiven Vorzeichen (linke Halbebene a_{y} > 0) nicht auslösen. Weist hingegen gemäß FIG 5 die Drehratenkomponente ωₓ um die Fahrzeuglängsrichtung x ein negatives Vorzeichen auf, führen Beschleunigungskomponenten a_{y} in Fahrzeugquerrichtung y mit einem negativen Vorzeichen (rechte Halbebene a_{y} < 0) nicht zu einer Absenkung des Traggestells 15, während bei Beschleunigungskomponenten a_{y} in Fahrzeugquerrichtung y mit einem positiven Vorzeichen (linke Halbebene a_{y} > 0) ein Absenken ausgelöst wird.

Den in FIG 6, FIG 7 und Fig 8 beschriebenen Fahrsituationen ist gemein, dass jeweils eine Drehratenkomponente ωₓ um die Fahrzeuglängsrichtung x mit positivem Vorzeichen vorliegt.

Gemäß FIG 6 fährt das Straßenfahrzeug 1 eine Linkskurve (Fahrtrichtung in die Blattebene hinein), etwa weil es vom elektrifizierten, rechten Fahrstreifen 3 auf den mittleren Fahrstreifen 5 ausweichen muss und dabei die Schleifleisten 19 des linken Kontaktpols den Kontakt zum Fahrdraht 4 verlieren. Diese Schleifleisten 19 steigen auf und bilden eine Höhendifferenz H zu den ihren Fahrdraht 4 noch kontaktierenden Schleifleisten 19 des rechten Kontaktpols aus. Um das Lichtraumprofil P nicht zu verletzen, soll das Traggestell 14 in dieser Situation abgesenkt werden. Die Steuereinrichtung 22 erhält in dieser Fahrsituation von der Messeinheit 21 eine Drehratenkomponente ωₓ um die Fahrzeuglängsrichtung x mit positivem Vorzeichen, da die Messeinheit 21 in einer Linkskurve mit dem Straßenfahrzeug 1 fliehkraftbedingt nach außen kippt, sich also in Fahrzeuglängsrichtung x gesehen um diese im Uhrzeigersinn dreht. Gleichzeitig erhält die Steuereinheit 22 von der Messeinheit 21 eine lineare Beschleunigungskomponente a_{y} in Fahrzeugquerrichtung y mit negativem Vorzeichen, weil das Straßenfahrzeug 1 in einer Linkskurve eine Beschleunigungskomponente a_{y}, die wie die Zentrifugalkraft vom Kurvenmittelpunkt weg zeigt. Damit liegt der Fall aus FIG 4, rechte Halbebene vor, wonach erfindungsgemäß ein Absenken des Traggestells 15 ausgelöst wird.

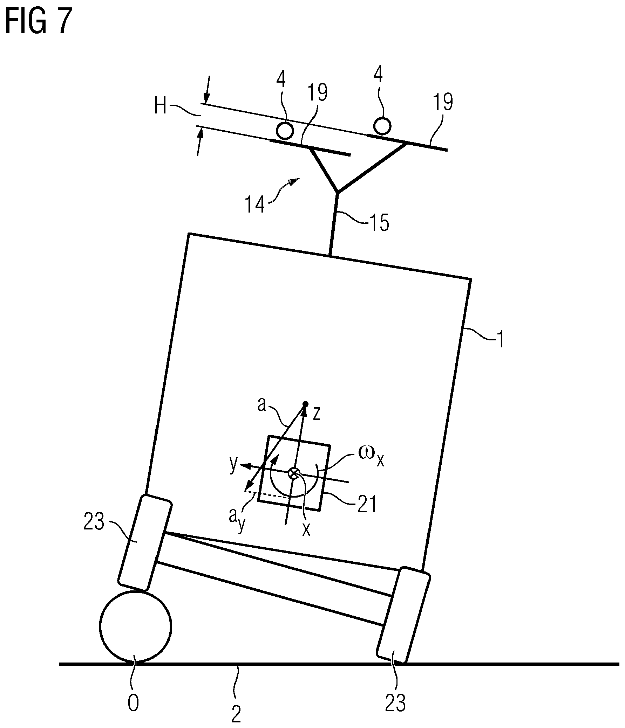

Gemäß FIG 7 überfährt das Straßenfahrzeug 1 mit einem in Fahrzeuglängsrichtung x gesehen linken Fahrzeugrad 23 ein auf der Fahrbahn 2 liegendes Hindernis O, beispielsweise einen Gesteinsbrocken. Durch das Anheben des linken Fahrzeugrades 23 liefert die Messeinheit 21 an die Steuereinheit 22 eine Drehratenkomponente ωₓ um die Fahrzeuglängsrichtung x mit positivem Vorzeichen und eine lineare Beschleunigungskomponente a_{y} in Fahrzeugquerrichtung y mit positivem Vorzeichen, so dass gemäß FIG 4 das Traggestell 14 nicht abgesenkt wird. Die hierfür große Hubdifferenz H kann sich also unter Aufrechterhaltung des Leistungsbezugs aus den Fahrdrähten 4 ausbilden, ohne dass das Lichtraumprofil P verletzt wird.

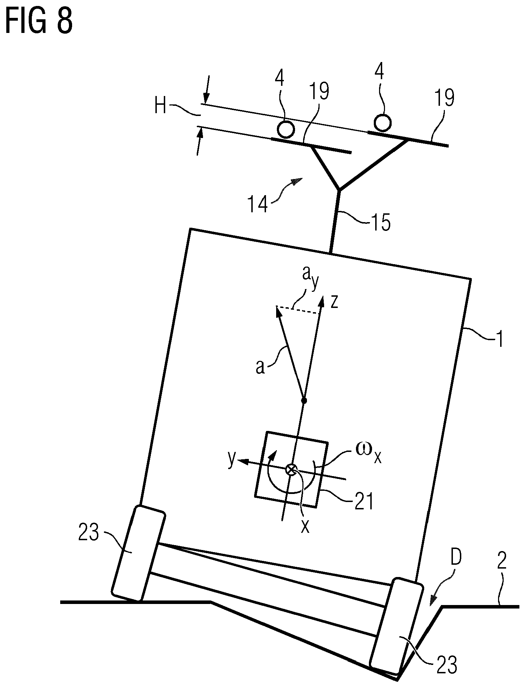

Gemäß FIG 8 durchfährt das Straßenfahrzeug 1 mit einem in Fahrzeuglängsrichtung x gesehenen rechten Fahrzeugrad 23 eine Vertiefung D in der Fahrbahn 2, etwa ein tiefes Schlagloch. Durch das Fallen des rechten Fahrzeugrades 23 liefert die Messeinheit 21 an die Steuereinheit 22 eine Drehratenkomponente ωₓ um die Fahrzeuglängsrichtung x mit positivem Vorzeichen und eine lineare Beschleunigungskomponente a_{y} in Fahrzeugquerrichtung y mit positivem Vorzeichen, so dass gemäß FIG 4 das Traggestell 14 nicht abgesenkt wird. Die hierfür große Hubdifferenz H kann sich also ebenfalls unter Aufrechterhaltung des Leistungsbezugs aus den Fahrdrähten 4 ausbilden, ohne dass das Lichtraumprofil P verletzt wird.

## Patentansprüche

1. Straßenfahrzeug (1), umfassend
- einen elektrischen oder hybridelektrischen Traktionsantrieb (13) und
- einen Stromabnehmer (14) zur Einspeisung von Traktionsenergie aus einer zweipoligen, je Kontaktpol einen Fahrdraht (4) aufweisenden Oberleitungsanlage, welcher
- ein aufrichtbares Traggestänge (15) mit einem festen Ende (16), an dem es sich gelenkig auf einer Gestängebasis (17) abstützt, und einem freien Ende (18), an dem es je Kontaktpol wenigstens eine Schleifleiste (19) zur elektrischen Kontaktierung der jeweiligen Fahrdrähte (4) trägt, und
- einen Hubantrieb (20) zum Aufrichten und Absenken des Traggestänges (15) zwischen einer unteren Ruheposition und einer oberen Arbeitsposition der Schleifleisten (19) aufweist,
- wobei das Traggestänge (15) derart ausgebildet ist, dass es in der oberen Arbeitsposition zwischen den Schleifleisten (19) der unterschiedlichen Kontaktpole eine Hubdifferenz (H) ermöglicht,
**gekennzeichnet durch**
- eine fahrzeugfeste, inertiale Messeinheit (21) zur Erfassung von Beschleunigungskomponenten (aₓ, a_{y}, a_{z}) ihres Beschleunigungsvektors (a) und von Drehratenkomponenten (ωₓ, ω_{y}, ω_{z}) ihres Drehratenvektors (ω) jeweils in einem durch Fahrzeuglängsrichtung (x), Fahrzeugquerrichtung (y) und Fahrzeughochrichtung (z) gebildeten Koordinatensystem,
- eine mit dem Hubantrieb (20) gekoppelte Steuereinheit (22), welche dazu ausgebildet ist, ein Absenken des Traggestänges (15) in Abhängigkeit wenigstens einer der erfassten Beschleunigungskomponenten (aₓ, a_{y}, a_{z}) und wenigstens einer der erfassten Drehratenkomponenten (ωₓ, ω_{y}, ω_{z}) auszulösen.

2. Straßenfahrzeug (1) nach Anspruch 1,
- wobei die Steuereinheit (22) dazu ausgebildet ist, die erfassten Beschleunigungskomponenten (aₓ, a_{y}, a_{z}) und die erfassten Drehratenkomponenten (ωₓ, ω_{y}, ω_{z}) zeitlich zu Integralwerten (Iaₓ, Ia_{y}, Ia_{z}; Iωₓ, Iω_{y}, Iω_{z}) aufzuintegrieren und ein Absenken des Traggestänges (15) in Abhängigkeit einer Überschreitung einer vorgegebenen Schwellwertkurve (I(t)) für den Integralwert (I) auszulösen.

3. Straßenfahrzeug (1) nach Anspruch 2,
- wobei die Schwellwertkurve (I(t)) für den Integralwert (I) zeitabhängig ist, vorzugsweise hyperbolisch mit der Zeit (t) abnimmt.

4. Straßenfahrzeug (1) nach einem der Ansprüche 1 bis 3,
- wobei die Steuereinheit (22) dazu ausgebildet ist, ein Absenken des Traggestänges (15) auszulösen, falls die Werte der Drehratenkomponente (ωₓ) um die Fahrzeuglängsrichtung (x) und der Beschleunigungskomponente (a_{y}) in Fahrzeugquerrichtung (y) ungleiche Vorzeichen aufweisen.

5. Straßenfahrzeug (1) nach einem der Ansprüche 1 bis 4,
- wobei die Steuereinheit (22) dazu ausgebildet ist, ein Absenken des Traggestänges (15) auszulösen, falls die Drehratenkomponente (ω_{y}) um die Fahrzeugquerrichtung (y) einen vorgegebenen positiven Maximalwert überschreitet und/oder die Beschleunigungskomponente (aₓ) in Fahrzeuglängsrichtung (x) einen vorgegebenen negativen Maximalwert überschreitet.

## Claims

1. Road vehicle (1) comprising
- an electric or a hybrid electric traction drive (13) and
- a current collector (14) for feeding traction energy from a two-pole overhead line system having one contact wire (4) per contact pole,
- an erectable support linkage (15) with a fixed end (16) at which it is supported in an articulated manner on a linkage base (17), and a free end (18) at which it supports at least one contact strip (19) per contact pole for electrically contacting the respective contact wires (4), and
- a lifting drive (20) for erecting and lowering the support linkage (15) between a lower rest position and an upper working position of the contact strips (19),
- wherein the support linkage (15) is embodied in such a way that it enables a lift difference (H) in the upper working position between the contact strips (19) of the different contact poles,
**characterised by**
- a vehicle-fixed inertial measuring unit (21) for capturing acceleration components (aₓ, a_{y}, a_{z}) of its acceleration vector (a) and of rotation rate components (ωₓ, ω_{y}, ω_{z}) of its rotation rate vector (ω) in each case in a coordinate system formed by vehicle longitudinal direction (x), vehicle transverse direction (y) and vehicle vertical direction (z),
- a control unit (22) which is coupled to the lifting drive (20) and is embodied to trigger lowering of the support linkage (15) as a function of at least one of the captured acceleration components (aₓ, a_{y}, a_{z}) and at least one of the captured rotation rate components (ωₓ, ω_{y}, ω_{z}).

2. Road vehicle (1) according to claim 1,
- wherein the control unit (22) is embodied to integrate the captured acceleration components (aₓ, a_{y}, a_{z}) and the captured rotation rate components (ωₓ, ω_{y}, ω_{z}) temporally to integral values (Iaₓ, Ia_{y}, Ia_{z}; Iωₓ, Iω_{y}, Iω_{z}) and to trigger lowering of the support linkage (15) as a function of exceeding of a predefined threshold value curve (I(t)) for the integral value (I).

3. Road vehicle (1) according to claim 2,
- wherein the threshold value curve (I(t)) for the integral value (I) is time-dependent, preferably decreases hyperbolically with time (t).

4. Road vehicle (1) according to one of claims 1 to 3,
- wherein the control unit (22) is embodied to trigger lowering of the support linkage (15) if the values of the rotation rate component (ωₓ) about the vehicle longitudinal direction (x) and the acceleration component (a_{y}) in the vehicle transverse direction (y) have unequal signs.

5. Road vehicle (1) according to one of claims 1 to 4,
- wherein the control unit (22) is embodied to trigger lowering of the support linkage (15) if the rotation rate component (ω_{y}) about the vehicle transverse direction (y) exceeds a predefined positive maximum value and/or the acceleration component (aₓ) in the vehicle longitudinal direction (x) exceeds a predefined negative maximum value.

## Revendications

1. Véhicule (1) routier, qui a
- un entraînement (13) de traction électrique ou hybride et
- un collecteur (14) de courant pour l'injection d'énergie de traction à partir d'une installation à fil de contact, comportant un fil (4) de contact bipolaire par pôle de contact, qui
- porte une tringlerie (15) de support orientable ayant un bout (16) fixe, où elle s'appuie d'une manière articulée sur une base (17) de tringlerie, et un bout (18) libre, où elle porte, par pôle de contact, au moins une baguette (19) de frottement pour la mise en contact électrique des fils (4) de contact respectifs, et
- un entraînement (20) de levage pour lever et abaisser la tringlerie (15) de support entre une position inférieure de repos et une position supérieure de travail des baguettes (19) de frottement,
- dans lequel la tringlerie (15) de support est constituée de manière à rendre possible, dans la position supérieure de travail, une différence (H) de levée entre les baguettes (19) de frottement des différents pôles de contact,
**caractérisé par**
- une unité (21) de mesure inertielle, fixée au véhicule, pour la détection de composantes (aₓ, a_{y}, a_{z}) d'accélération de son vecteur (a) d'accélération et de composantes (ωₓ, ω_{y}, ω_{z}) d'angle de rotation de son vecteur (ω) d'angle de rotation, respectivement dans un système de coordonnées formé par la direction (x) longitudinale du véhicule, la direction (y) transversale du véhicule et la direction (z) en hauteur du véhicule,
- une unité (22) de commande, qui est reliée à l'entraînement (20) de levage et qui est constituée pour déclencher un abaissement de la tringlerie (15) de support en fonction d'au moins l'une des composantes (aₓ, a_{y}, a_{z}) d'accélération détectées et d'au moins l'une des composantes (ωₓ, ω_{y}, ω_{z}) d'angle de rotation détectées.

2. Véhicule (1) routier suivant la revendication 1,
- dans lequel l'unité (22) de commande est constituée pour intégrer dans le temps les composantes (aₓ, a_{y}, a_{z}) d'accélération détectées et les composantes (ωₓ, ω_{y}, ω_{z}) d'angle de rotation détectées en des valeurs (Iaₓ, Ia_{y}, Ia_{z} ; Iωₓ, Iω_{y}, Iω_{z}) d'intégrale et pour déclencher un abaissement de la tringlerie (15) de support en fonction d'un dépassement d'une courbe (I(t)) de valeur de seuil donnée à l'avance pour la valeur (I) d'intégrale.

3. Véhicule (1) routier suivant la revendication 2,
- dans lequel la courbe (I(t)) de valeur de seuil pour la valeur (I) d'intégrale dépend du temps en diminuant, de préférence de manière hyperbolique, en fonction du temps (t).

4. Véhicule (1) routier suivant l'une des revendications 1 à 3,
- dans lequel l'unité (22) de commande est constituée pour déclencher un abaissement de la tringlerie (15) de support, si les valeurs de la composante (ωₓ) d'angle de rotation autour de la direction (x) longitudinale du véhicule et de la composante (a_{y}) d'accélération dans la direction (y) transversale au véhicule ont des signes qui ne sont pas les mêmes.

5. Véhicule (1) routier suivant l'une des revendications 1 à 4,
- dans lequel l'unité (22) de commande est constituée pour déclencher un abaissement de la tringlerie (15) de support, si la composante (ω_{y}) d'angle de rotation autour de la direction (y) transversale du véhicule dépasse une valeur maximum positive donnée à l'avance et/ou si la composante (aₓ) d'accélération dans la direction (x) longitudinale du véhicule dépasse une valeur maximum négative donnée à l'avance.
